# EUROPEAN PATENT SPECIFICATION

(11) **EP 2 330 156 B1**
(45) Date of publication and mention of the grant of the patent: **20.08.2014**
(21) Application number: 09809585.4
(22) Date of filing: 27.08.2009
(51) Int. Cl.: C08L 77/00, B63B 19/14, B63B 19/18, C08G 63/12, C08K 3/00, C08L 27/18, C08L 83/04, F16C 29/02, F16C 33/20, C08G 69/16, C08L 77/06, B63B 25/00, F16C 17/14, C08L 67/03, C08L 77/02, C08L 83/00

(54) **RESIN COMPOSITION FOR SLIDE MEMBER, SLIDE MEMBER, AND BEARING DEVICE FOR HATCH COVER**
HARZZUSAMMENSETZUNG FÜR SCHIEBEELEMENT, SCHIEBEELEMENT UND LAGERVORRICHTUNG FÜR EINE LUKENABDECKUNG
COMPOSITION DE RESINE POUR ELEMENT COULISSANT, ELEMENT COULISSANT ET DISPOSITIF PORTEUR POUR COUVERCLE DE TRAPPE

(30) Priority: 30.08.2008 JP 2008222944
(43) Date of publication of application: 08.06.2011
(73) Proprietor: Oiles Corporation, Tokyo 108-0075 (JP)
(72) Inventor: YAMAMOTO, Yoshiaki, Fujisawa-shi Kanagawa 252-0811 (JP); HIRAI, Kazuo, Fujisawa-shi Kanagawa 252-0811 (JP)
(74) Representative: Berggren Oy Ab
(86) International application number: PCT/JP2009/004185
(87) International publication number: WO 2010/023930

(56) References cited:
- WO-A1-2008/029510
- JP-A- 8 085 758
- JP-A- 53 121 391
- JP-A- H07 503 261
- JP-A- 2000 074 136
- JP-A- 2002 138 196

## Description

### TECHNICAL FIELD

The present invention relates to a resin composition for a sliding member, a sliding member, and a supporting device for a hatch cover which exhibit excellent friction and wear characteristics under the condition of dry friction or lubrication in water or saltwater or under a lubrication condition in which water (rainwater) or saltwater is intermittently applied.

### BACKGROUND ART

Polyamide resins are used in extensive fields such as automobiles, electric and electronic parts, and household electrical appliances because they have excellent moldability, heat resistance, toughness, chemical resistance, and wear resistance. In particular, a polyamide resin containing a lubricating filler such as molybdenum disulfide, graphite, or a tetrafluoroethylene resin excels in the friction and wear characteristics, and attackability on a mating member is mitigated, so that the polyamide resin is used various bearings, gears, slide plates, guide members, and the like. For example, Patent Document 1 discloses a sliding member in which a polyamide resin is used as a principal component, and a polyethylene resin and a polyarilate resin are further contained. In addition, Patent Document 2 discloses a sliding member in which a polyamide resin is used as a principal component, and a polyethylene resin, a hydrocarbon-based wax, and inorganic whiskers are further contained.

Both of these sliding members disclosed in Patent Documents 1 and 2 exhibit excellent friction and wear characteristics in use under the condition of dry friction (non-lubrication).

In addition, there is an example in which a sliding member, which uses a polyamide resin as a principal component, and which further contains a tetrafluoroethylene resin, a molybdenum disulfide, and a silicone oil as lubricating fillers, is used as a supporting device for a hatch cover which covers a hatch opening portion on the deck of a marine vessel. The sliding member of this usage is used under such a severe condition that the condition of dry friction or lubrication in water or saltwater and a lubrication condition in which water (rainwater) or saltwater is intermittently applied to sliding surfaces are alternately repeated. Patent Document 3 discloses a sliding member in which a polytetrafluoroethylene resin with glass fibers or a glass powder mixed therewith is filled in a blind hole provided in a support base.

### PRIOR ART DOCUMENTS

### PATENT DOCUMENTS

Patent Document 1: JP-A-2002-138196
Patent Document 2: JP-A-2003-335940
Patent Document 3: JP-T-8-512008
Patent Document 4: JP-UM-A-5-32284
Patent Document 5: JP-UM-B-53-41275

### SUMMARY OF THE INVENTION

### Problems to be Solved by the Invention

The sliding member used in the aforementioned supporting device for a hatch cover which covers a hatch opening portion on an upper deck plate of a marine vessel is required to excel in corrosion resistance and friction and wear characteristics (low friction characteristics and wear resistance) and in impact resistance. This sliding member exhibits excellent friction and wear characteristics under dry lubrication; however, in the case of lubrication in water or saltwater or in the case where water (rainwater) or saltwater is intermittently applied to sliding surfaces, there is a problem in that the coefficient of friction rises sharply and the amount of wear increases. In addition, with the sliding member disclosed in Patent Document 3, there is a problem in that the polytetrafluoroethylene resin comes off the blind hole due to an impact load applied to the sliding member.

The present invention has been devised in view of the above-described aspects, and its object is to provide a resin composition for a sliding member, a sliding member, and a supporting device for a hatch cover which are capable of exhibiting excellent friction and wear characteristics even under the condition of dry friction or lubrication in water or saltwater and under a lubrication condition in which water (rainwater) or saltwater is intermittently applied to sliding surfaces.

### MEANS FOR SOLVING THE PROBLEMS

As a result of repeatedly conducting earnest studies, the present inventors found that a sliding member obtained by molding a resin composition in which a polyamide resin is compounded with specific amounts of a polyarilate resin, a polytetrafluoroethylene resin, a high molecular weight silicone polymer, and an inorganic filler exhibits excellent friction and wear characteristics and has impact resistance and corrosion resistance even in sliding applications under dry friction and where water or saltwater is intermittently applied.

The present invention has been completed on the basis of the above-described finding, and a resin composition for a sliding member in accordance with the present invention comprises: 5 to 15% by mass of a polyarilate resin, 10 to 25% by mass of a polytetrafluoroethylene resin, 0.5 to 2% by mass of a high molecular weight silicone polymer, 0.5 to 5% by mass of an inorganic filler, and the balance of a polyamide resin. Said high molecular weight silicone polymer is a gum-like silicone polymer whose viscosity at normal temperature is not less than 1.0 *m²*/*s* (1,000,000 cSt) and does not form a cross-linked structure.

As the polyamide resin constituting a principal component among the components, an aliphatic polyamide resin, inter alia, polyhexamethylene adipamide (hereafter referred to as "Nylon 66") is preferable. The Nylon 66 exhibits low water absorbability, has high rigidity, heat resistance, and wear resistance, exhibits excellent performance in elasticity, and does not corrode like a metal even under a severe condition for a metal such as seawater.

The polyarilate resin (hereafter referred to as the "PAR") among the components is a polycondensation resin between an aromatic dibasic acid or its derivative and a dihydric phenol or its derivative, and a polycondensation resin of Bisphenol A and a mixed acid of a terephthalic acid and an isophthalic acid, which has a repeating unit represented by the following formula, is particularly preferable:

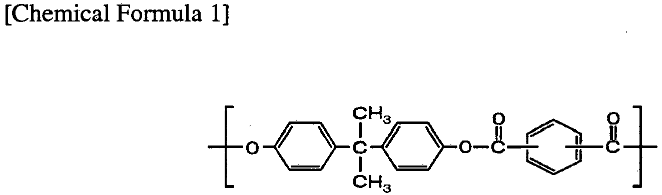

As the PAR, it is possible to specifically cite "U-polymer (tradename)" manufactured by Unitika Ltd. This PAR is preferably used in the form of a polymer alloy with the polyamide resin (Nylon 6). In terms of the composition ratio between the PAR and the polyamide resin in this polymer alloy, the PAR is 10 to 70% by mass, and the polyamide resin is 90 to 30% by mass, and most preferably, the PAR is 30 to 60% by mass, and the polyamide resin is 70 to 40% by mass. In this polymer alloy, the PAR is dispersed in a matrix of the polyamide resin as particles of 1 µm or thereabouts, and this polymer alloy has high impact resistance and heat resistance and also excels in low-temperature characteristics.

The compounding amount of the PAR is 5 to 15% by mass, preferably 5 to 10% by mass. If the compounding amount is less than 5% by mass, the effect of the polymer alloy is not exhibited, whereas if the PAR is compounded in excess of 15% by mass, the wear resistance is lowered.

The polytetrafluoroethylene resin (hereafter abbreviated as the "PTFE") among the components is compounded for the purpose of ameliorating the low friction characteristics. As the PTFE, a low molecular weight PTFE for lubrication is preferable. This low molecular weight PTFE is a PTFE whose molecular weight is lowered by cracking a high molecular weight PTFE (molding powder or fine powder) by such as exposure to radiation or by adjusting the molecular weight during the polymerization of the PTFE. Specifically, it is possible to cite "TLP-10F (tradename)" or the like manufactured by Du Pont-Mitsui Fluorochemicals Co., Ltd., "Lubron L-5 (tradename)" or the like manufactured by Daikin Industries, Ltd., "Fluon (registered trademark) L169E (tradename)" or the like manufactured by Asahi Glass Co., Ltd., and "KTL-8N (tradename)" or the like manufactured by KITAMURA LIMITED. The compounding amount of this PTFE is 10 to 25% by mass, preferably 10 to 15% by mass. If the compounding amount is less than 10% by mass, sufficient low friction characteristics cannot be imparted, whereas if the PTFE is compounded in excess of 25% by mass, a decline in strength and a decline in wear resistance result.

The high molecular weight silicone polymer among the components exhibits the action of improving initial affinity particularly in water lubrication and of inhibiting the occurrence of stick-slip. This high molecular weight silicone polymer is a gum-like silicone which does not have a cross-linked structure between solid molecules at normal temperature. The high molecular weight silicone polymer (hereafter abbreviated as the "gum-like silicone") used in the present invention is a dimethyl polysiloxane or one in which some of its methyl groups are substituted by one or more kinds of a hydrogen group, a phenyl group, a halogenated phenyl group, a fluoro ester group, and the like, and whose viscosity at normal temperature is very high at not less than 1,000,000 cSt (centistokes). A gum-like silicone whose viscosity at normal temperature is not less than 5,000,000 cSt is preferably used.

The compounding amount of the gum-like silicone is 0.5 to 2% by mass, preferably 1 to 1.5% by mass. Further, this gum-like silicone is preferably used in the form of a polyamide resin which is obtained by being kneaded in advance with the polyamide resin constituting the principal component to thereby contain a high concentration of the gum-like silicone. Specifically, it is possible to cite Silicone Concentrate BY27 series manufactured by Dow Corning Toray Co., Ltd.

As the inorganic filler among the components, it suffices if at least one of a carbon black and a spherical nonporous silica (amorphous silicon dioxide) is used. The carbon black exhibits the effect of lowering the coefficient of friction in water or saltwater lubrication, while the spherical nonporous silica exhibits an effect in improving the wear resistance. As the carbon black, it is possible to cite general carbon blacks, such as acetylene black, oil furnace black, thermal black, channel black, and gas furnace black. In particular, however, a carbon black whose BET type surface area based on N₂ adsorption is not less than 850 m²/g, e.g., "Ketjen Black (tradename)" or the like manufactured by Lion Akzo Co., Ltd., can be cited as a preferred one. As the compounding amount of the carbon black, 0.5 to 3% by mass is appropriate. The spherical nonporous silica is spherical particles with an average particle size of 0.2 to 20 µm, and since it is nonporous, its moisture content is small. Further, since the aggregation of particles is at a low level, its dispersibility is excellent. Specifically, it is possible to cite "SUNSPHERE NP (tradename)" or the like manufactured by AGC Si-Tech Co., Ltd." and "ADMAFINE (tradename)" or the like manufactured by Admatechs Company Limited. As the compounding amount of this spherical nonporous silica, 0.5 to 2% by mass is appropriate. Further, the compounding amount of this inorganic filler is 0.5 to 5% by mass, preferably 0.5 to 3.5% by mass. If the compounding amount is less than 0.5% by mass, an effect is not demonstrated in the imparting of low friction characteristics and in the improvement of wear resistance, whereas if the inorganic filler is compounded in excess of 5% by mass, the low friction characteristics are lowered.

The resin composition for a sliding member in accordance with the present invention is obtained by mixing predetermined amounts of the above-described components in a mixing machine, such as a Henschel mixer, a super mixer, a ball mill, or a tumbler mixer in accordance with a conventional method.

Next, a description will be given of the sliding member in accordance with the present invention. The sliding member of the present invention is formed by molding the above-described resin composition for a sliding member. As a method of molding the resin composition for a sliding member, it is possible to adopt either a method in which the sliding member is molded directly by an injection molding machine or an extruder or a method in which pellets of the resin composition for a sliding member are fabricated in advance, and these pellets are molded by an injection molding machine or an extruder to form the sliding member.

The sliding member in accordance with the present invention is used as a sliding member such as a slide bearing, a slide bearing device, a sliding plate, or the like which is capable of exhibiting excellent friction and wear characteristics in sliding applications under the condition of dry friction or lubrication in water or saltwater or under a lubrication condition in which water or saltwater is intermittently applied.

The supporting device for a hatch cover in accordance with the present invention for covering a hatch opening portion on the deck of a marine vessel comprises: a sliding plate fixed to either one of the deck of the marine vessel at a peripheral edge of the opening portion of the hatch and a lower surface side of the hatch cover; and a slide member fixed to another one of the deck of the marine vessel at a peripheral edge of the opening portion of the hatch and the lower surface side of the hatch cover, said slide member being constituted by the sliding member.

In the present invention, said slide member constituted by the sliding member is fixed in a recess of a holder fixed to either one of the deck of the marine vessel at the peripheral edge of the hatch opening portion and the lower surface side of the hatch cover such that one end face is located outside the recess of the holder.

At least one of a shim plate and a rubber plate may be interposed between the recess of the holder and another end face of the slide member.

### ADVANTAGEOUS EFFECT OF THE INVENTION

According to the present invention, it is possible to provide a resin composition for a sliding member, a sliding member, and a supporting device for a hatch cover which are capable of exhibiting excellent friction and wear characteristics even under the condition of dry friction, under the condition of lubrication in water or saltwater, and under a lubrication condition in which water (rainwater) or saltwater is intermittently applied.

### BRIEF DESCRIPTION OF THE DRAWINGS

Fig. 1 is a cross-sectional view of a container vessel with containers loaded;
Fig. 2 is a cross-sectional view illustrating a supporting device for a hatch cover;
Fig. 3 is a perspective view illustrating a holder and a slide member of the supporting device;
Fig. 4 is a cross-sectional view taken in the direction of arrows along line IV - IV in Fig. 3;
Fig. 5 is a cross-sectional view taken in the direction of arrows along line V - V in Fig. 3;
Fig. 6 is a cross-sectional view illustrating another embodiment of the holder and the slide member of the supporting device;
Fig. 7 is a cross-sectional view taken in the direction of arrows along line VII-VII in Fig. 6;
Fig. 8 is a cross-sectional view illustrating another embodiment of the supporting device for a hatch cover;
Fig. 9 is a cross-sectional view illustrating a conventional supporting device for a hatch cover; and
Fig. 10 is a cross-sectional view illustrating another conventional supporting device for a hatch cover.

### MODE FOR CARRYING OUT THE INVENTION

Hereafter, a detailed description will be given of the present invention on the basis of examples. However, these examples are merely illustrative and not intended to limit the invention thereto. The polyamide resin, the PAR, the PTFE, the gum-like silicone, and the inorganic fillers used in Examples and Comparative Examples are shown in Table 1 below.

**[Table 1]**

| <Polyamide Resin> | |
|---|---|
| A-1: | Nylon 66 ("Amilan CM3001N (tradename)" manufactured by Toray Industries, Inc.) |

| <PAR (Polyarilate Resin)> | |
|---|---|
| B-1: | A polymer alloy ("U-polymer AX-1500 (tradename)" manufactured by Unitika Ltd.) which consists of 50% by mass of PAR and 50% by mass of a polyamide resin (Nylon 6) |

| <PTFE (Polytetrafluoroethylene Resin)> | |
|---|---|
| C-1: | "Lubron L-5 (tradename)" manufactured by Daikin Industries, Ltd. |

| <Gum-Like Silicone (High Molecular Weight Silicone Polymer> | |
|---|---|
| D-1: | Nylon 66 ("Silicone Concentrate BY27-005" manufactured by Dow Corning Toray Co., Ltd.) containing 50% by mass of a gum-like silicone |

| <Inorganic Fillers> | |
|---|---|
| E-1: | Carbon black ("Ketjen Black (tradename)" manufactured by Lion Akzo Co., Ltd.) |
| E-2: | Spherical nonporous silica "SUNSPHERE NP (tradename)" manufactured by AGC Si-Tech Co., Ltd. |

| <Solid Lubricant> | |
|---|---|
| F-1: | Molybdenum disulphide ("molybdenum disulphide powder" manufactured by Daitou Co., Ltd.) |

| <Lubricating Oil> | |
|---|---|
| G-1: | Silicone oil (dimethyl silicone oil "FK96H (tradename)" manufactured by Shin-Etsu Chemical Co., Ltd.) |

### EXAMPLES

### Examples 1 and 2

51 to 71% by mass of the Nylon 66 (A-1), 10 to 30 parts by mass of the PAR (B-1), 15 parts by mass of the PTFE (C-1), 3 parts by mass of the gum-like silicone (D-1), and 1 part by mass of the carbon black (E-1) were mixed in a Henschel mixer to form a resin composition, and the resin composition was subsequently subjected to extrusion molding by being melted and kneaded by a screw extruder, thereby obtaining pellets consisting of 52.5 to 72.5% by mass of the Nylon 66, 5 to 15% by mass of the Nylon 6, 5 to 15% by mass of the PAR, 15% by mass of the PTFE, 1.5% by mass of the gum-like silicone, and 1% by mass of the carbon black. Then, these pellets were supplied to a screw in-line type injection molding machine as a molding material, to thereby obtain a plate-like molded article (sliding member) with longitudinal and transverse lengths of 30 mm each and a thickness of 3 mm.

### Examples 3 and 4

51.5 to 71.5% by mass of the Nylon 66 (A-1), 10 to 30 parts by mass of the PAR (B-1), 15 parts by mass of the PTFE (C-1), 3 parts by mass of the gum-like silicone (D-1), and 0.5 part by mass of the spherical nonporous silica (E-2) were mixed in the Henschel mixer to form a resin composition, and the resin composition was subsequently subjected to extrusion molding by being melted and kneaded by the screw extruder, thereby obtaining pellets consisting of 53 to 73% by mass of the Nylon 66, 5 to 15% by mass of the Nylon 6, 5 to 15% by mass of the PAR, 15% by mass of the PTFE, 1.5% by mass of the gum-like silicone, and 0.5% by mass of the spherical nonporous silica. Then, these pellets were supplied to the screw in-line type injection molding machine as a molding material, to thereby obtain a plate-like molded article (sliding member) with longitudinal and transverse lengths of 30 mm each and a thickness of 3 mm.

### Examples 5 to 7

48.5 to 71.5 parts by mass of the Nylon 66 (A-1), 10 to 30 parts by mass of the PAR (B-1), 15 parts by mass of the PTFE (C-1), 2 to 3 parts by mass of the gum-like silicone (D-1), and 1 to 3 parts by mass of the carbon black (E-1), and 0.5 part by mass of the spherical nonporous silica (E-2) were mixed in the Henschel mixer to form a resin composition, and the resin composition was subsequently subjected to extrusion molding by being melted and kneaded by the screw extruder, thereby obtaining pellets consisting of 50 to 72.5% by mass of the Nylon 66, 5 to 15% by mass of the Nylon 6, 5 to 15% by mass of the PAR, 15% by mass of the PTFE, 1 to 1.5% by mass of the gum-like silicone, 1 to 3% by mass of the carbon black, and 0.5% by mass of the spherical nonporous silica. Then, these pellets were supplied to the screw in-line type injection molding machine as a molding material, to thereby obtain a plate-like molded article (sliding member) with longitudinal and transverse lengths of 30 mm each and a thickness of 3 mm.

### Comparative Example 1

79% by mass of the Nylon 66 (A-1), 20% by mass of the PTFE (C-1), and 1% by mass of the molybdenum disulphide (F-1) were mixed in the Henschel mixer to form a resin composition, and the resin composition was subsequently subjected to extrusion molding by being melted and kneaded by the screw extruder, thereby obtaining pellets. Then, these pellets were supplied to the screw in-line type injection molding machine as a molding material, to thereby obtain a plate-like molded article (sliding member) with longitudinal and transverse lengths of 30 mm each and a thickness of 3 mm.

### Comparative Example 2

77% by mass of Nylon 66 (A-1), 20% by mass of the PTFE (C-1), 1% by mass of the molybdenum disulphide (F-1), and 2% by mass of the silicone oil (G-1) were mixed in the Henschel mixer to form a resin composition, and the resin composition was subsequently subjected to extrusion molding by being melted and kneaded by the screw extruder, thereby obtaining pellets. Then, these pellets were supplied to the screw in-line type injection molding machine as a molding material, to thereby obtain a plate-like molded article (sliding member) with longitudinal and transverse lengths of 30 mm each and a thickness of 3 mm.

With respect to the plate-like molded articles (sliding members) obtained in the above-described Examples 1 to 7 and Comparative Examples 1 and 2, sliding characteristics were evaluated by the following thrust rotation test and planar reciprocation test.

### Thrust Rotation Test

The coefficient of friction and the amount of wear were measured under the conditions listed in Table 2. The coefficient of friction shows variable values of the coefficient of friction from one hour after the start of the test until the completion of the test. The amount of wear shows the amount of dimensional change after completion of the test period (8 hours). The test results are shown in Tables 4 to 6.

**[Table 2]**

| | |
|---|---|
| Surface pressure: | 24.5 MPa (250 kgf/cm²) |
| Velocity: | 1.0 m/min |
| Test period: | 8 hrs. |
| Mating member: | Stainless steel plate (SUS 304: JIS-G-4304) |
| Friction environment (lubrication): | |
| | (1) Non-lubrication (in atmosphere) (2) In saltwater with a saltwater concentration of 3% |
| Test method: | A thrust rotation test in which the plate-like molded article |
| | (sliding member) was fixed in the atmosphere or saltwater, and a cylindrical bushing made of SUS 304 and serving as a mating member was rotated while the cylindrical bushing was being pressed against the surface of the plate-like molded article (sliding member) from above with a predetermined load (surface pressure). |

### Planar Reciprocation Test

The coefficient of friction and the amount of wear were measured under the conditions listed in Table 3. The coefficient of friction shows variable values of the coefficient of friction from one hour after the start of the test until the completion of the test. The amount of wear shows the amount of dimensional change after completion of the test period (100 hours). The test results are shown in Tables 4 to 6.

**[Table 3]**

| | |
|---|---|
| Surface pressure: | 24.5 MPa (250 kgf/cm²) |
| Velocity: | 0.2 m/min |
| Stroke: | ±10 mm |
| Test period: | 100 hrs. |
| Mating member: | Stainless steel plate (SUS 316: JIS-G-4304) |
| Friction environment (lubrication): | |
| | (1) Non-lubrication (in atmosphere) (2) In water |
| Test method: | A planar reciprocation test in which a slide plate made of SUS 316 and serving as a mating member was fixed in the |
| | atmosphere or water, and the plate-like molded article (sliding member) was reciprocated along the surface of the slide plate while the plate-like molded article (sliding member) was being pressed against the surface of the slide plate with a predetermined load (surface pressure). |

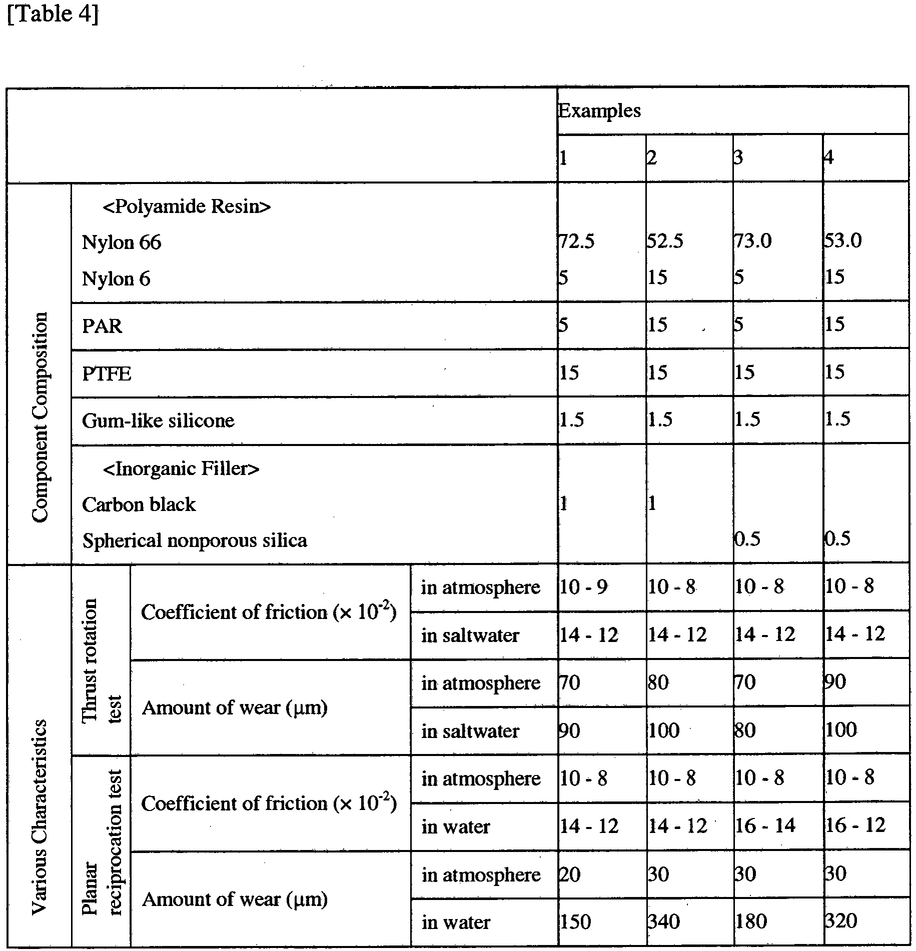

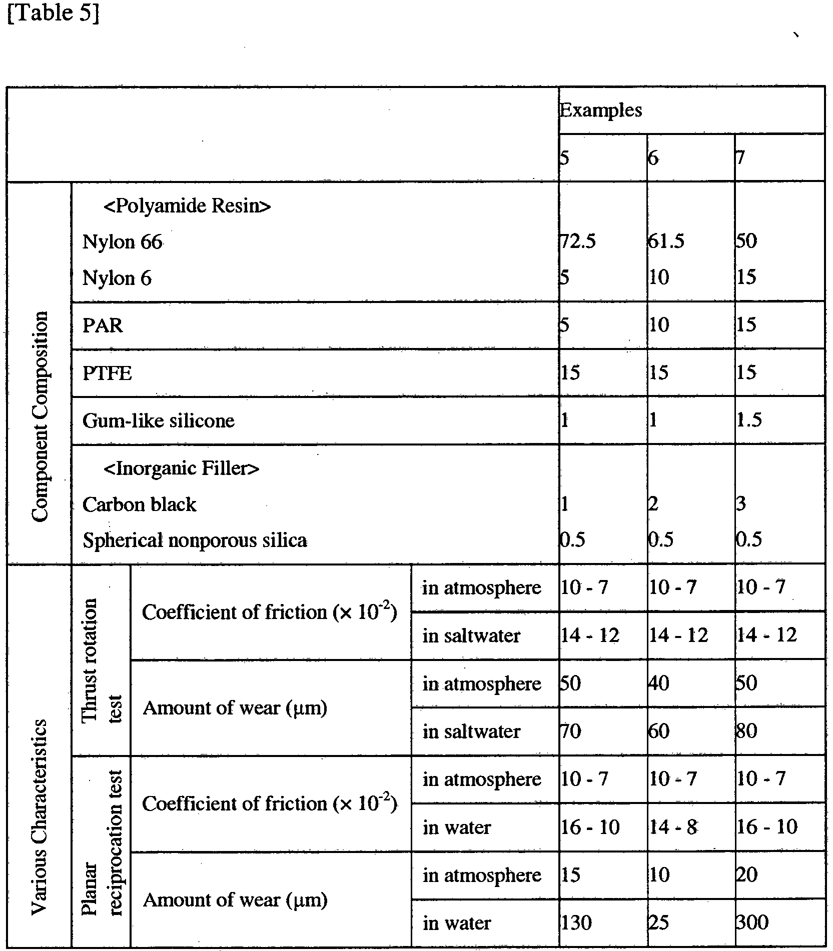

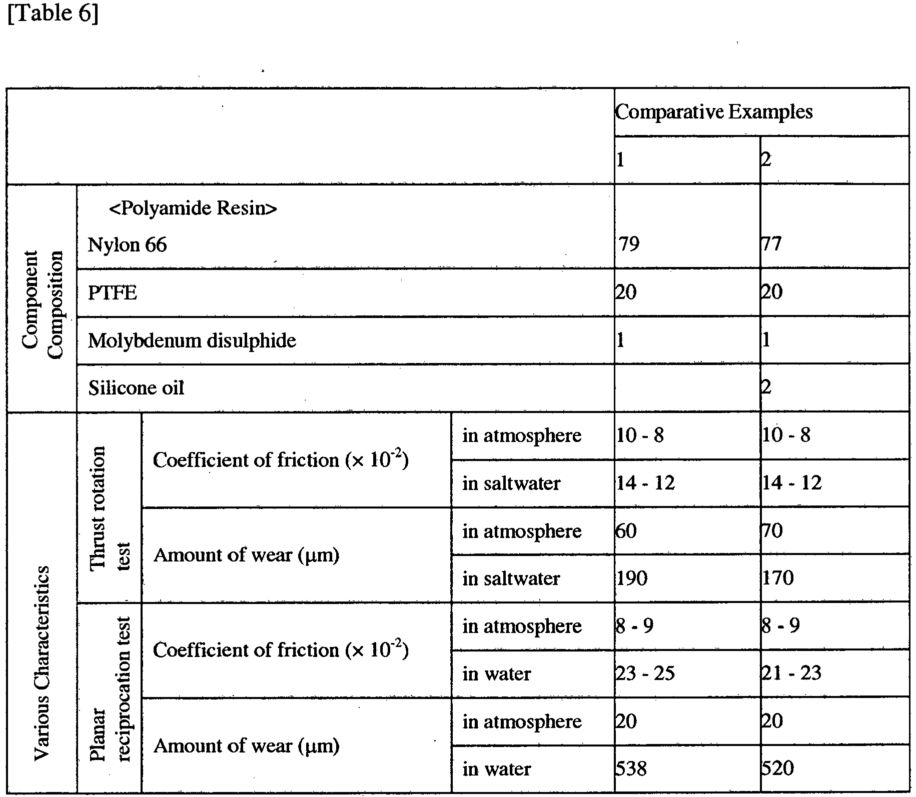

From the above-described test results, if a comparison is made between Examples and Comparative Examples, it can be appreciated that a large difference is produced particularly in the amount of wear in the thrust rotation test in saltwater in terms of the friction environment and in the planar reciprocation test in water. The sliding members in accordance with Examples exhibited small variations in the sliding characteristics due to the difference in the friction environment, and demonstrate excellent sliding characteristics under all conditions of the frictional environment.

Next, a description will be given of a supporting device for a hatch cover for covering a hatch opening portion provided on the upper deck of a marine vessel such as a container vessel.

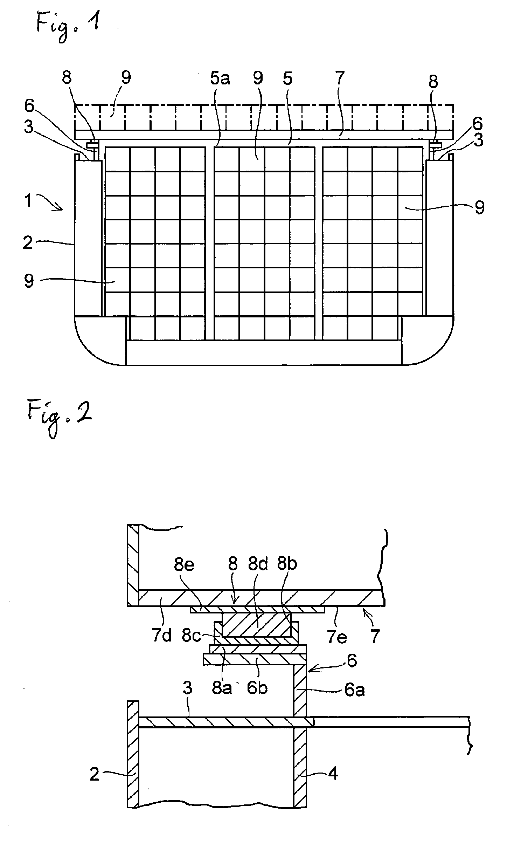

In Figs. 1 and 2, reference numeral 1 denotes a container vessel; 2, a side plating (outer shell); 3, an upper deck plate; 4, a longitudinal bulkhead; 5, a hatch; 6, a hatch coaming provided uprightly on the upper deck plate 3 in such a manner as to surround peripheral edges of an opening portion 5a of the hatch 5; 6a, a hatch coaming skirt plate for forming the hatch coaming 6; 6b, a hatch coaming top plate for forming the hatch coaming 6 and continuously provided integrally at an end face of the hatch coaming skirt plate 6a horizontally; 7, a hatch cover for covering the opening portion 5a of the hatch 5; 8, a supporting device for the hatch cover for supporting the hatch cover 7 movably on the hatch coaming top plate 6b of the hatch coaming 6; and 9, a container loaded in the hatch 5 of the container vessel 1 and on the upper surface of the hatch cover 7.

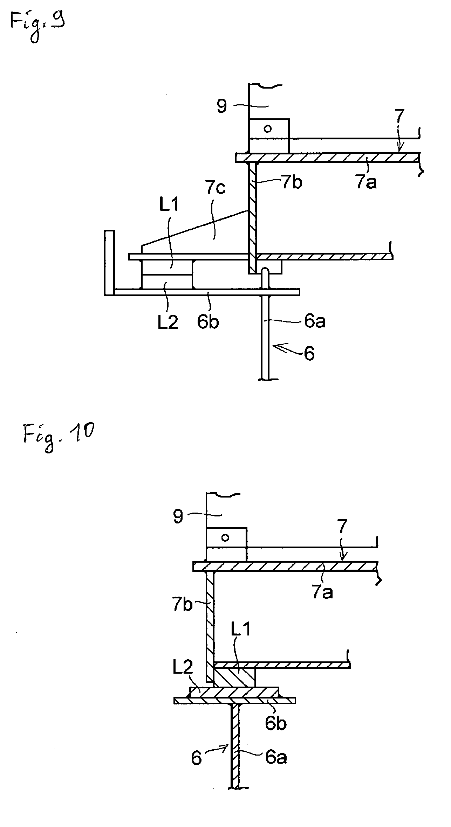

Fig. 9 shows a conventional supporting device for a hatch cover. An upper liner L1 is mounted on a bracket 7c provided projectingly on a side surface of a hatch cover skirt plate 7b provided suspendedly from a peripheral edge portion of a hatch cover top plate 7a of the hatch cover 7, while a lower liner L2 is mounted on the hatch coaming top plate 6b. The arrangement provided is such that the lower surface of the upper liner L1 is brought into direct contact with the upper surface of the lower liner L2 so as to support the hatch cover 7.

With the above-described conventional supporting device for a hatch cover, since both the upper liner L1 and the lower liner L2 for supporting the hatch cover 7 are made of steel, when relative displacement between the hatch cover 7 and the hatch coaming 6 occurs due to the torsion of the hull during the voyage of the marine vessel, the upper liner L1 and the lower liner L2 undergo slight sliding, and yet the relative displacement cannot be sufficiently absorbed because the coefficient of friction is large between them. Hence, the displacement of the hull which occurs repeatedly during the voyage repeatedly brings about changes in the shape of the hatch cover 7, eventually resulting in the occurrence of partial breakage of the hatch cover 7.

Fig. 10 shows a supporting device concerning an improvement of the supporting device for a hatch cover shown in Fig. 9. The arrangement provided is such that the upper liner L1 formed of a material whose coefficient of friction is low is secured to the inner side of the hatch cover skirt plate 7b, while the lower liner L2 having a smooth surface is secured on the hatch coaming top plate 6b in such a manner as to be constantly capable of being in contact with the upper liner L1. Further, the upper liner L1 is formed of a material having a low coefficient of friction such as a nonferrous metal (copper alloy), a non-metal (synthetic resin), or a thermoplastic resin, while the lower liner L2 is formed of a stainless plate or the same material as that of the upper liner L1 and is laid over a range wider than the bottom area of the upper liner L1.

In the above-described improved supporting device, sliding surfaces are formed by the upper liner L1 formed of a material whose coefficient of friction is low and the lower liner L2 having a smooth surface, and the hatch cover 7 is freely movable, so that the displacement of the hatch coaming 6, i.e., the displacement of the hull, is not transmitted to the hatch cover 7. As a result, the breakage of the hatch cover skirt plate 7b and the like due to the displacement of the hull can be prevented. However, with this supporting device as well, the sliding surfaces, which are formed by the upper liner L1 formed of a material whose coefficient of friction is low and the lower liner L2 having a smooth surface, are unable to effect smooth movement of the hatch cover 7 unless they have small variations in the sliding characteristics even under the condition of dry friction, under the condition of friction in water or saltwater, or under a friction condition in which water or saltwater is intermittently applied to the sliding frictional surfaces, and exhibit excellent sliding characteristics under all conditions of the frictional environment. Thus, a supporting device which exhibits excellent sliding characteristics under all conditions of the frictional environment has been called for.

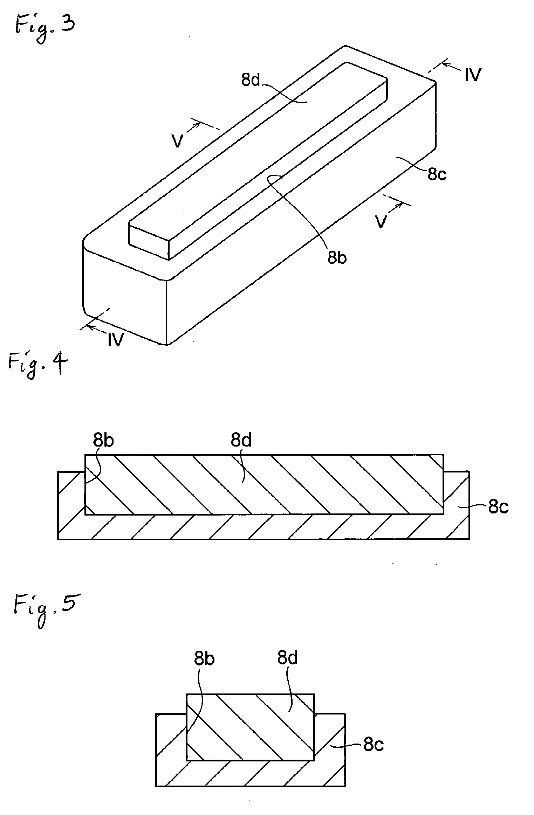

The supporting device 8 for the hatch cover 7 shown in Figs. 2 through 5 is comprised of a metallic base 8a fixed on the hatch coaming top plate 6b; a metallic holder 8c of a rectangular parallelepiped shape fixed to the base 8a and having a recess 8b of a cross-sectionally square shape; a slide member 8d which is fitted and held in the recess 8b and is disposed with one end face located outside the recess 8b; and a sliding plate 8e made of stainless steel and fixed to a lower surface 7e of a hatch cover bottom plate 7d of the hatch cover 7 opposing the hatch coaming top plate 6b. The hatch cover 7 is movably supported on the hatch coaming top plate 6b by means of sliding contact between the slide member 8d formed on the hatch coaming top plate 6b and the metallic sliding plate 8e fixed to the lower surface 7e of the hatch cover 7.

The slide member 8d is constituted by a sliding member which is formed as a resin composition for a sliding member composed of 5 to 15% by mass of PAR, 10 to 25% by mass of PTFE, 0.5 to 2% by mass of gum-like silicone, 0.5 to 5% by mass of an inorganic filler, and the balance of a polyamide resin is subjected to injection molding.

Irrespective of the difference in the friction environment, i.e., even under the condition of dry friction, under the condition of friction in water or saltwater, or under a friction condition in which water (rainwater) or saltwater is intermittently applied to the sliding frictional surfaces, the sliding member forming the slide member 8d exhibits small variations in the sliding characteristics and demonstrates excellent sliding characteristics under all conditions of the frictional environment. As such a sliding member is applied to the slide member 8d of the supporting device 8 for the hatch cover 7, even if relative displacement between the hatch cover 7 and the hatch coaming 6 occurs due to the torsion of the hull during the voyage of the marine vessel, since the hatch cover 7 is movably supported on the hatch coaming top plate 6b by means of sliding contact between the slide member 8d and the metallic sliding plate 8e fixed to the lower surface 7e of the hatch cover 7, the displacement of the hull occurring repeatedly during the voyage is not transmitted to the hatch cover 7. Consequently, it is possible to prevent damage to the hatch cover 7 and the like attributable to the displacement of the hull.

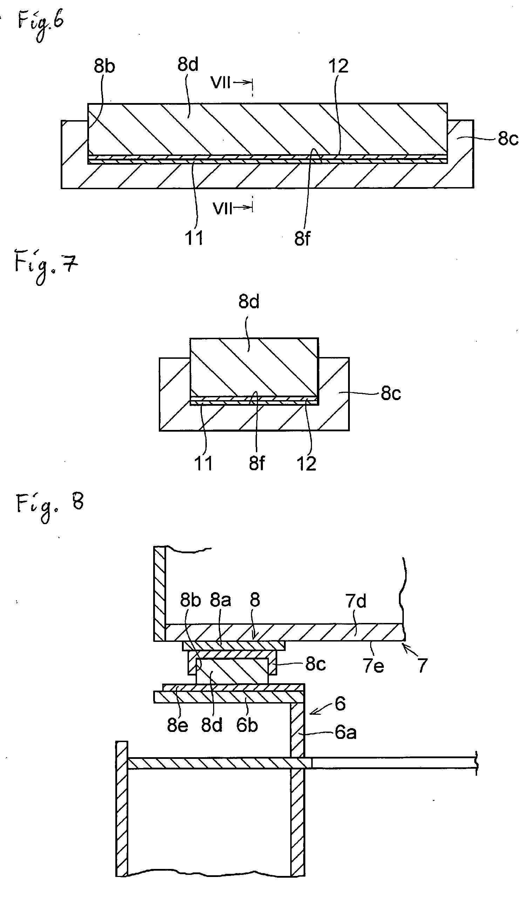

Figs. 6 and 7 show another embodiment of the supporting device 8 for the hatch cover 7. In this supporting device 8, at least one of a shim plate 11 and a rubber plate 12 is interposed between a recessed bottom surface 8f of the holder 8c at the recess 8b and the slide member 8d fitted and held with one end face located outside the recess 8b. The shim plate 11 acts as an adjustment plate in the heightwise direction of the slide member 8d, while the rubber plate 12 corrects the unevenness of the surface of the sliding plate 8e. By virtue of the elastic deformation of the rubber plate 12, it is possible to secure a smooth sliding contact surface between the slide member 8d and the sliding plate 8e.

Fig. 8 shows still another embodiment of the supporting device 8 for the hatch cover 7. This supporting device 8 is comprised of the sliding plate 8e fixed on the hatch coaming top plate 6b; the metallic base 8a fixed to the lower surface 7e of the hatch cover 7 opposing the hatch coaming top plate 6b; the metallic holder 8c of a rectangular parallelepiped shape fixed to the base 8a and having the recess 8b; and the slide member 8d which is fitted and held in the recess 8b with one end face located outside the recess 8b. The hatch cover 7 is movably supported on the hatch coaming top plate 6b by means of sliding contact between the slide member 8d fitted and held in the recess 8b of the holder 8c fixed to the lower surface 7e of the hatch cover 7 and the metallic sliding plate 8e fixed on the hatch coaming top plate 6b. In this supporting device 8, since the lower surface of the slide member 8d serves as the sliding surface with respect to the sliding plate 8e, foreign objects such as dust are prevented from being deposited on that sliding surface.

Also in this supporting device 8, the slide member 8d is constituted by a sliding member which is formed as a resin composition for a sliding member composed of 5 to 15% by mass of PAR, 10 to 25% by mass of PTFE, 0.5 to 2% by mass of gum-like silicone, 0.5 to 5% by mass of an inorganic filler, and the balance of a polyamide resin is subjected to injection molding.

In sliding with a mating member, irrespective of changes in the environmental conditions of the sliding surfaces, i.e., even under the condition of dry friction, under the condition of friction in water or saltwater, or under a friction condition in which water (rainwater) or saltwater is intermittently applied to the sliding frictional surfaces, the resin composition for a sliding member and the sliding member in accordance with the present invention exhibit small variations in the sliding characteristics and demonstrate excellent sliding characteristics under all conditions of the frictional environment. In addition, in the case where such a sliding member excelling in the sliding characteristics is applied to the slide member of the supporting device for the hatch cover, excellent sliding characteristics are similarly demonstrated with respect to changes in the environmental conditions of the sliding surfaces. Even if relative displacement between the hatch cover and the hatch coaming occurs due to the torsion of the hull during the voyage of the marine vessel such as a container vessel, since the hatch cover is movably supported on the hatch coaming top plate by means of sliding contact between the slide member and the metallic sliding plate, the displacement of the hull occurring repeatedly during the voyage is not transmitted to the hatch cover. Consequently, it is possible to prevent damage to the hatch cover and the like attributable to the displacement of the hull.

## Claims

1. A resin composition for a sliding member comprising: 5 to 15% by mass of a polyarilate resin, 10 to 25% by mass of a polytetrafluoroethylene resin, 0.5 to 2% by mass of a high molecular weight silicone polymer, 0.5 to 5% by mass of an inorganic filler, and the balance of a polyamide resin, wherein said high molecular weight silicone polymer is a gum-like silicone polymer whose viscosity at normal temperature is not less than 1.0 *m²*/*s* (1,000,000 cSt) and does not form a cross-linked structure.

2. The resin composition for a sliding member according to claim 1, wherein said polyamide resin is a mixture of polyhexamethylene adipamide and polycaprolactam.

3. The resin composition for a sliding member according to claim 1 or 2, wherein at least one of a carbon black and spherical nonporous silica is used as said inorganic filler.

4. A sliding member formed by molding the resin composition for a sliding member according to any one of claims 1 to 3.

5. A supporting device (8) for a hatch cover (7) for covering an opening portion (5a) of a hatch (5) which is open on an upper deck of a marine vessel, comprising: a sliding plate (8e) fixed to either one of a hatch coaming (6) provided uprightly at a peripheral edge of the opening portion (5a) of the hatch (5) in such a manner as to surround the opening portion (5a) and a lower surface (7e) side of the hatch cover (7) opposing the hatch coaming (6); and a slide member (8d) fixed to another one of the hatch coaming (6) provided uprightly at the peripheral edge of the opening portion (5a) of the hatch (5) in such a manner as to surround the opening portion (5a) and the lower surface (7e) side of the hatch cover (7) opposing the hatch coaming (6), said slide member (8d) being constituted by the sliding member according to claim 4.

6. The supporting device (8) for a hatch cover (7) according to claim 5, wherein said slide member (8d) is fitted and held in a recess (8b) of a holder (8c) fixed to either one of the deck of the marine vessel at the peripheral edge of the hatch opening portion and the lower surface (7e) side of the hatch cover (7) such that one end face is located outside the recess (8b) of the holder (8c).

7. The supporting device (8) for a hatch cover (7) according to claim 6, wherein at least one of a shim plate (11) and a rubber plate (12) is interposed between the recess (8b) of the holder (8c) and said slide member (8d) fitted and held in the recess (8b).

## Patentansprüche

1. Harzzusammensetzung für ein Gleitelement, welche aufweist: 5 bis 15 Massenprozent eines Polyarilatharzes, 10 bis 25 Massenprozent eines Polytetrafluorethylenharzes, 0,5 bis 2 Massenprozent eines Silikonpolymers mit hohem Molekulargewicht, 0,5 bis 5 Massenprozent eines anorganischen Füllstoffs, und der Rest eines Polyamidharzes, wobei das Silikonpolymer mit hohem Molekulargewicht ein gummiartiges Silikonpolymer ist, dessen Viskosität bei Normaltemperatur nicht weniger als 1,0 m²/s (1.000.000 cSt) beträgt und keine vernetzte Struktur bildet.

2. Die Harzzusammensetzung für ein Gleitelement nach Anspruch 1, worin das Polyamidharz ein Gemisch von Polyhexamethylenadipamid und Polycaprolaktam ist.

3. Die Harzzusammensetzung für ein Gleitelement nach Anspruch 1 oder 2, worin Ruß und/oder kugelförmiges nichtporöses Silika als der anorganische Füllstoff verwendet wird.

4. Gleitelement, das durch Formen der Harzzusammensetzung für ein Gleitelement gemäß einem der Ansprüche 1 bis 3 gebildet ist.

5. Trägervorrichtung (8) für eine Lukenabdeckung (7) zum Abdecken eines Öffnungsabschnitts (5a) einer Luke (5), die sich am oberen Deck eines Schiffes öffnet, welche aufweist:
eine Gleitplatte (8e), die entweder an einem Lukensüll (6), das aufrecht am Umfangsrand des Öffnungsabschnitts (5a) der Luke (5) derart vorgesehen ist, dass es den Öffnungsabschnitt (5a) umgibt, oder einer Unterseite (7e) der Lukenabdeckung (7) gegenüber dem Lukensüll (6) befestigt ist; sowie ein Gleitelement (8d), das am jeweils anderen des Lukensülls (6), das aufrecht am Umfangsrand des Öffnungsabschnitts (5a) der Luke (5) derart vorgesehen ist, dass es den Öffnungsabschnitt (5a) umgibt, und der Unterseite (7e) der Lukenabdeckung (7) gegenüber dem Lukensüll (6) befestigt ist, wobei das Gleitelement (8d) durch das Gleitelement nach Anspruch 4 dargestellt ist.

6. Die Trägervorrichtung (8) für eine Lukenabdeckung (7) nach Anspruch 5, wobei das Gleitelement (8d) in eine Vertiefung (8b) eines Halters (8c) eingesetzt und dort gehalten wird, der entweder am Deck des Schiffes am Umfangsrand des Lukenöffnungsabschnitts oder der Unterseite (7c) der Lukenabdeckung (7) derart befestigt ist, dass sich eine Endfläche außerhalb der Vertiefung (8b) des Halters (8c) befindet.

7. Die Trägervorrichtung (8) für eine Lukenabdeckung (7) nach Anspruch 6, wobei eine Beilagscheibe (11) und/oder eine Gummiplatte (12) zwischen die Vertiefung (8b) des Halters (8c) und das in die Vertiefung (8b) eingesetzte und dort gehaltene Gleitelement (8d) eingefügt ist.

## Revendications

1. Composition de résine pour un élément coulissant comprenant : 5 à 15 % en masse d'une résine polyarilate, 10 à 25 % en masse d'une résine polytétrafluoroéthylène, 0,5 à 2 % en masse d'un polymère de silicone de haut poids moléculaire, 0,5 à 5 % en masse d'une charge inorganique et, pour l'équilibre, une résine polyamide, ledit polymère de silicone de haut poids moléculaire étant un polymère de silicone de type gomme dont la viscosité à température normale n'est pas inférieure à 1,0 m²/s (1 000 000 cSt) et ne forme pas une structure réticulée.

2. Composition de résine pour un élément coulissant selon la revendication 1, ladite résine polyamide étant un mélange d'adipamide de polyhexaméthylène et de polycaprolactame.

3. Composition de résine pour un élément coulissant selon la revendication 1 ou 2, dans laquelle au moins un parmi le noir de carbone et la silice sphérique non poreuse est utilisé comme dite charge inorganique.

4. Élément coulissant formé en moulant la composition de résine en un élément coulissant selon l'une quelconque des revendications 1 à 3.

5. Dispositif support (8) pour un couvercle de trappe (7) destiné à couvrir une partie ouvrante (5a) d'une trappe (5) qui est ouverte sur le pont supérieur d'un vaisseau marin, comprenant : une plaque coulissante (8e) fixée à l'un de l'encadrement de la trappe (6) placé verticalement à un bord périphérique de la partie ouvrante (5a) de la trappe (5) de façon à entourer la partie ouvrante (5a) et du côté de la surface inférieure (7e) du couvercle de trappe (7) faisant face à l'encadrement de la trappe (6) ; et un élément coulissant (8d) fixé à l'autre de l'encadrement de la trappe (6) placé verticalement au bord périphérique de la partie ouvrante (5a) de la trappe (5) de façon à entourer la partie ouvrante (5a) et du côté de la surface inférieure (7e) du couvercle de la trappe (7) faisant face à l'encadrement de la trappe (6), ledit élément coulissant (8d) étant constitué par l'élément coulissant selon la revendication 4.

6. Dispositif support (8) pour un couvercle de trappe (7) selon la revendication 5, dans lequel ledit élément coulissant (8d) est adapté et maintenu dans un logement (8b) d'un appui (8c) fixé soit au bord périphérique de la partie ouvrante de la trappe du pont du vaisseau marin, soit au côté de la surface inférieure (7e) du couvercle de la trappe (7) de façon qu'une face terminale soit placée à l'extérieur du logement (8b) de l'appui (8c).

7. Dispositif support (8) d'un couvercle de trappe (7) selon la revendication (6), dans lequel au moins une parmi une cale d'épaisseur (11) et une cale en caoutchouc (12) est interposée entre le logement (8b) de l'appui (8c) et ledit élément coulissant (8d) adapté et maintenu dans le logement (8b).
